Europäisches Patentamt

European Patent Office

Office européen des brevets

(19)

(11) Veröffentlichungsnummer: **0 022 993**
**B1**

# (12) EUROPÄISCHE PATENTSCHRIFT

(45) Veröffentlichungstag der Patentschrift:
**20.07.83**

(21) Anmeldenummer: **80104000.7**

(22) Anmeldetag: **11.07.80**

(51) Int. Cl.³: **A 01 D 23/06**

(54) **Verfahren und Vorrichtung zum Ernten von Rübenköpfen und Rübenblatt.**

(30) Priorität: **23.07.79 DE 2929783**

(43) Veröffentlichungstag der Anmeldung:
**28.01.81 Patentblatt 81/4**

(45) Bekanntmachung des Hinweises auf die Patenterteilung:
**20.07.83 Patentblatt 83/29**

(84) Benannte Vertragsstaaten:
**BE CH FR GB LI NL SE**

(56) Entgegenhaltungen:
**DE-U-7 727 630**
**FR-A-1 136 494**
**FR-A-2 312 187**
**GB-A-1 147 304**

(73) Patentinhaber: **Schulte, Werner, Bruchstrasse 4,
D-4787 Geseke 3/ Langeneicke (DE)**

(72) Erfinder: **Schulte, Werner, Bruchstrasse 4,
D-4787 Geseke 3/ Langeneicke (DE)**

EP 0 022 993 B1

Verfahren und Vorrichtung zum Ernten von Rübenköpfen und Rübenblatt

Die Erfindung betrifft ein Verfahren zum Ernten von Rübenköpfen und Rübenblatt mittels einer über die Rübenreihen fahrenden Erntevorrichtung, bei welchem zuerst das Rübenblatt von der Rübe abgeschlagen und dabei gehäckselt und einer Fördervorrichtung zugeführt wird und dann die Kopfscheibe individuell je nach der Wuchshöhe der Rübe abgeschnitten und einem mit den Rübenblättern gemeinsamen Sammelbehälter zugeführt wird, sowie eine Vorrichtung zum Ernten von Rübenköpfen und Rübenblatt, bestehend aus einem in seiner Arbeitshöhe fest einstellbaren Häcksler, der den Hauptteil des Rübenblattes abschlegelt, häckselt und fördert sowie einer nachgeschalteten, aus Schleiftaster und Messer bestehenden Köpfvorrichtung zum Abschneiden der Kopfscheibe.

Aus DE-U-7 727 630 ist eine Vorrichtung zum Ernten von Rübenköpfen und Rübenblatt bekannt geworden, die einen in seiner Arbeitshöhe fest einstellbaren Häcksler aufweist, der den Hauptteil des Rübenblattes abschlegelt, häckselt und einer Transportschnecke zuführt. Mit einer nachgeschalteten, aus Schleiftaster und Messer bestehenden Köpfvorrichtung werden die Kopfscheiben der Rüben abgeschnitten. Die abgeschnittenen Kopfscheiben der Rüben werden aufgefangen und über eine gesonderte Fördervorrichtung, die aus einem Höhenförderer und einem angeschlossenen Querförderband besteht, einem gemeinsamen Blattsammelbunker zugeführt. Will man auch die Rübenköpfe gehäckselt dem gemeinsamen Blattsammelbunker zuführen, ist dem Querförderband ein weiterer Häcksler nachzuordnen. Die beiden Häcksler bilden einen erheblichen Bauaufwand, der nur schlecht genutzt wird, weil der zweite Häcksler nur sehr wenig Masse zu zerkleinern hat, während der Aufwand an Gewicht, Bauraum, Antriebsenergie und Kosten gross ist.

Es ist die Aufgabe der Erfindung, mit nur einem Häcksler, demjenigen, der die Hauptmasse der Ernte — das Rübenblatt — verarbeitet, auch die Rübenkopfscheiben zu zerkleinern, obwohl diese erst nach dem Abschneiden des Rübenblattes abgeschnitten werden, und gleichzeitig auch nur eine zum Bunker führende Transportvorrichtung zu benutzen.

Die Erfindung besteht darin, dass die Kopfscheibe nach dem Schnitt in ihrer Bewegungsrichtung um ca. 150 bis 190° geändert, damit in Bewegungsrichtung der Erntevorrichtung zurückgeworfen und dem Häckselvorgang des Rübenblattes zugeführt wird.

Durch die Änderung der Bewegungsrichtung der Kopfscheibe nach dem Abschneiden dieser Kopfscheibe wird erreicht, dass die Kopfscheibe entgegen der Fahrtrichtung der Erntemaschine in den Häcksler für das Rübenblatt geworfen, dort zusammen mit dem Rübenblatt zerkleinert und anschliessend zusammen mit dem Rübenblatt in den Bunker gefördert wird. Hierdurch wird nicht nur ein zweiter Häcksler, sondern auch eine zweite Fördervorrichtung für die geernteten Kopfscheiben eingespart.

Es ist zweckmässig, wenn die Kopfscheiben vor dem Rückwerfen aufgefangen, zwischengelagert und bis in eine Rückwerfvorrichtung geschoben werden. Auf diese Weise lässt sich nämlich die bereits vorhandene Vorrichtung mit ihrer nach oben gerichteten Fläche ausnutzen, um die Rübenkopfscheiben vor ihrer Rückbewegung aufzufangen, aufzuhalten und zwischenzulagern, bis sich mehrere Kopfscheiben vor die Rückwerfvorrichtung geschoben haben, von dieser erfasst werden und in den Häcksler hineingeworfen werden.

Die erfindungsgemässe Vorrichtung zum Ernten von Rübenköpfen und Rübenblatt zeichnet sich dadurch aus, dass oberhalb von Taster und Messer ein rotierender Wischer vorgesehen ist, der die gleiche Drehrichtung wie die Häckselvorrichtung aufweist und dass die Oberseite des Tasters als Führung für die Kopfscheiben dient und ausgebildet ist. Dieser Wischer dreht ebenso wie der Häcksler mit dem unteren Teil seiner Umfangsbahn in Richtung der Bewegung der Erntemaschine, so dass von der Häckselvorrichtung das Rübenblatt nach vorne gegen ein Umlenkblech geleitet wird, während von dem Wischer die Rübenkopfscheiben ebenfalls nach vorne geworfen werden und dabei in den Häcksler fallen, der diese Rübenkopfscheiben zusammen mit dem Rübenblatt kleinschlägt. Der Häcksler dient dabei sowohl zum Abschlagen der Rübenblätter als auch zum Zerkleinern von Rübenblatt und Rübenkopfscheiben als auch zum Transport der zerschlagenen Rübenblätter und Rübenkopfscheiben in eine Fördervorrichtung, die oberhalb der Achsen von dem Häcksler und dem Wischer angeordnet ist. Als Wischer dient dabei eine rotierende Welle, an der elastische Streifen befestigt sind. Die Umfangsbahn dieser elastischen Streifen verläuft oberhalb der Rübenköpfe, nämlich oberhalb des Messers und des Tasters.

Baulich ist es vorteilhaft, wenn das Messer und ein an das Messer anschliessender Fangrost oder ein Fangblech eine Fangvorrichtung für die Kopfscheiben bilden, so dass diese nicht auf den Acker fallen können. In dieser Fangvorrichtung werden die Rübenkopfscheiben gesammelt bis sie von dem Umfang des rotierenden Wischers erfasst werden und in die Häckselvorrichtung hineingeworfen werden.

Zweckmässigerweise sind Messer und Fangrost bzw. Fangblech zum Boden hin gewölbt gestaltet, wobei der gedachte Mittelpunkt dieser Wölbung etwa zwischen den Achsen des Häckslers und des Wischers liegt.

Vorteilhaft ist es, wenn die nach oben ragenden Spitzen des Fangrostes ebenso wie die Messerschneide in Fahrtrichtung der Erntemaschine weisen. Auf diese Weise werden die Kopfscheiben sicher aufgefangen, zwischengelagert und bis in den als Rückwerfvorrichtung dienenden Wischer geschoben.

Vorteilhaft ist es, wenn der Wischer aus Streifen gebildet ist und Taster und/oder Fangrost aus hochkant angeordneten Flachstäben bestehen. Dann können die Streifen des Wischers zwischen die hochkant angeordneten Flachstäbe greifen und die Kopfscheiben sicher ergreifen und in den Häcksler schleudern.

Zweckmässig ist es, wenn die Oberfläche des Tasters an die Umlaufbahn des Wischers angepasst ist, weil dadurch dafür Sorge getragen ist, dass Rübenkopfscheiben bestmöglich vom Wischer ergriffen werden können und in den Hacksler hineingeschleudert werden können.

Vorteilhaft ist es, wenn die Verschwenkachse der Köpfvorrichtung sich zwischen dem Häcksler und dem Wischer befindet, vorzugsweise in dem Dreieck oberhalb deren unterer gemeinsamer Tangente. Die Köpfvorrichtung kann jedoch auch an einem Hebelparallelogramm befestigt sein, dessen Gelenktpunkte zumindest teilweise zwischen den Wischerstreifen liegen.

Vorteilhaft wird das Messer so angeordnet, dass es hinter der Projektion der Achse des Wischers auf dem Acker (bzw. die Horizontale) liegt.

Das Wesen der Erfindung ist nachstehend anhand eines in der Zeichnung schematisch dargestellten Ausführungsbeispieles näher erläutert.

Es zeigen:

Fig. 1 einen Schnitt durch die Vorrichtung zu einem Zeitpunkt, bei dem der Taster eine tiefstehende Rübe ansteuert.

Fig. 2 einen Schnitt durch die Vorrichtung zu einem Zeitpunkt, zu dem der Taster eine hoch aus der Ebene des Ackers herausgewachsene Rübe ansteuert.

Fig. 3 eine Ansicht von oben auf die Köpfvorrichtung.

Fig. 4 eine Ansicht von vorn auf die Köpfvorrichtung.

Fig. 5 eine andere Ausführungsform der Vorrichtung.

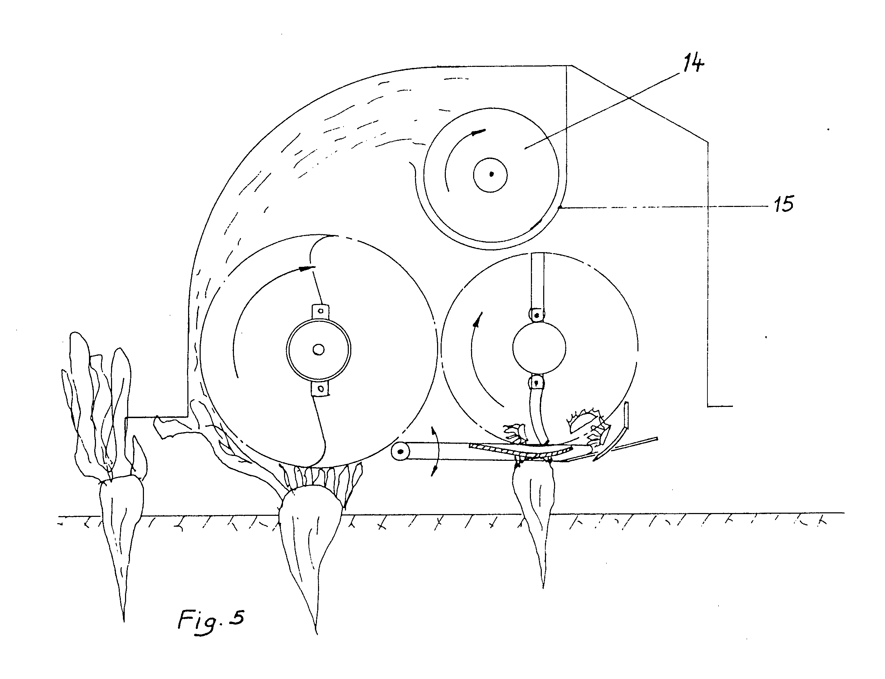

Die Vorrichtung der Fig. 1 besteht aus einem Häcksler 1 bekannter Bauart, der mit der Welle 2 im Uhrzeigersinn rotiert. In der Fahrtrichtung F der Erntemaschine, an der die Vorrichtung der Fig. 1 anmontiert ist, ist vor dem Häcksler 1 ein Leitblech 3 angebracht, mit dem das zerhäckselte Rübenblatt in einen Transportkanal 4 geschleudert wird, aus dem das zerkleinerte Rübenblatt mittels eines nicht dargestellten Transporteurs abtransportiert wird. Hinter dem Häcksler 1 (in Fahrtrichtung F gesehen) ist die Köpfvorrichtung angeordnet, die aus einem Schleiftaster 5 und einem Messer 6 besteht. Der Schleiftaster 5 ist aus einer Reihe parallel nebeneinander hochkant angeordneter Flacheisen 7 gebildet. Diese Flacheisen sind an ihrem einen Ende verschwenkbar um die Welle 8 angeordnet. Das eine seitlich angeordnete Flacheisen 7A trägt das Messer 6. Die Schneide des Messers 6 ist in Fahrtrichtung F gerichtet. Das Messer 6 trägt an seiner Hinterkante Stäbe 9 eines Fangrostes, die derart gebogen sind, dass ihre freien Enden in Fahrtrichtung weisen. Zwischen den freien Enden der Flacheisen 7 des Tasters 5 und dem Messer 6 befindet sich ein Spalt, durch den die Rübenkopfscheibe im Augenblick des Abschneides hindurchtritt, so dass sich Rübenkopfscheiben oberhalb der Flacheisen 7 des Tasters und des Messers 6 sammeln können, wobei sie an einem Herunterfallen von der Oberfläche der Flacheisen 7 und dem Messer 6 durch die gekrümmten Fangstäbe 6 gehindert werden.

Oberhalb der Tastvorrichtung 5 und dem Messer 6 befindet sich ein rotierender Wischer 10, der von einer Welle 11 angetrieben wird, an der verschwenkbar Streifen 12 angeordnet sind, die worzugsweise aus elastischem Material hergestellt sind. Dieser Wischer rotiert in der gleichen Drehrichtung wie der Häcksler 1, nämlich im Uhrzeigersinn. Die elastischen Streifen 12 des Wischers 10 sind so angeordnet, dass sie zwischen die Fangstäbe 9 hinter dem Messer 6 und zwischen die Flacheisen 7 greifen, wenn die Köpfvorrichtung infolge einer hoch aus dem Acker herausgewachsenen Rübe nach oben gedrückt wird.

Die Vorrichtung arbeitet folgendermassen:

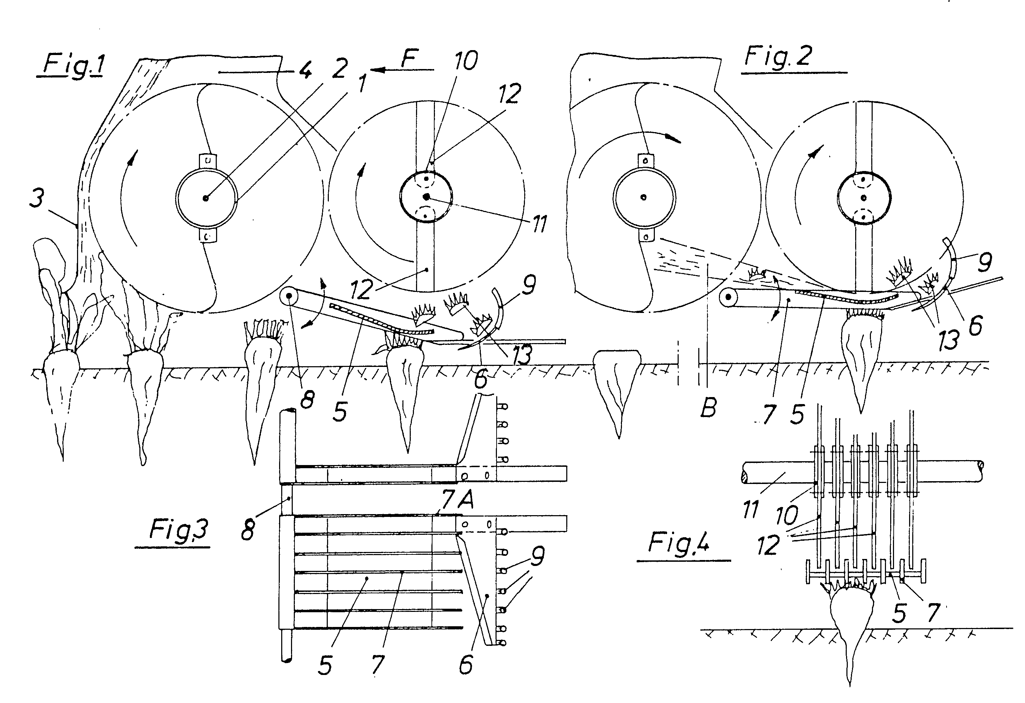

Der Häcksler 1 schlägt den Hauptteil des Rübenblattes ab, häckselt ihn klein und wirft ihn entlang dem Leitblech 3 in den Transportkanal 4. Damit stehen aus dem Rübenkopf nur noch Blattstrünke heraus. Anschliessend fährt über den Rübenkopf der Taster 5 hinweg, dessen Flacheisen die Schneidhöhe des Messers 6 einstellen. Dieses Messer 6 schneidet die Rübenkopfscheibe ab, die durch den Spalt zwischen den freien Enden der Flacheisen 7 des Tasters 5 und dem Messer 6 nach oben hin durchtritt und hier an einem Herabfallen von dem Messer 6 durch die Fangstäbe 9 gehindert wird. Die Rübenkopfscheiben 13 sammeln sich erst einmal auf der Oberfläche der Flacheisen 7 und dem Messer 6 vor den Fangstäben 9, solange der Taster über niedrig gewachsene Rüben hinwegstreicht. Sobald der Taster aber über eine hochgewachsene Rübe hinwegstreicht, wie das in Fig. 2 dargestellt ist, werden durch den nach oben verschwenkten Taster 5 die Rübenköpfe 13 angehoben und von den Wischerstreifen 12 erfasst, die sie längs der Bahn B in den Häcksler 1 werfen, wo sie gehäckselt werden und längs des Leitbleches 3 in den Kanal 4 in gehäckseltem Zustand geworfen werden.

Im Ausführungsbeispiel der Fig. 5 ist oberhalb der Achsen 2 und 11 von Häcksler 1 und Wischer 10 eine Transportschnecke 14 angeordnet, die in einer Transportrinne 15 liegt und der Fortbeförderung des gehäckselten Gutes dient. Da auch diese Transportschnecke 14 in der gleichen Drehrichtung wie der Häcksler und der Wischer angetrieben wird und da sämtliche drei Wellen von Häcksler, Wischer und Förderschnecke 14 innerhalb des Gestells der Vorrichtung fest in ihrer Achslage sind, ist ein höchst einfach zu konstruierender Antrieb anwendbar.

## Patentansprüche

1. Verfahren zum Ernten von Rübenköpfen und Rübenblatt mittels einer über die Rübenreihen fahrenden Erntevorrichtung, bei welchem zuerst das Rübenblatt von der Rübe abgeschlagen und dabei gehäckselt und einer Fördervorrichtung zugeführt wird und dann die Kopfscheibe individuell je nach der Wuchshöhe der Rübe abgeschnitten und einem mit den Rübenblättern gemeinsamen Sammelbehälter zugeführt wird, dadurch gekennzeichnet, dass die Kopfscheibe nach dem Schnitt in ihrer Bewegungsrichtung um ca. 150 bis 190° geändert, damit in Bewegungsrichtung der Erntevorrichtung zurückgeworfen und dem Häckselvorgang des Rübenblattes zugeführt wird.

2. Verfahren nach Anspruch 1, dadurch gekennzeichnet, dass die Kopfscheiben vor dem Rückwerfen aufgefangen, zwischengelagert und bis in eine Rückwerfvorrichtung geschoben werden.

3. Vorrichtung zum Ernten von Rübenköpfen und Rübenblatt, bestehend aus einem in seiner Arbeitshöhe fest einstellbaren Häcksler (1), der den Hauptteil des Rübenblattes abschlegelt, häckselt und fördert sowie einer nachgeschalteten, aus Schleiftaster (5) und Messer (6) bestehenden Köpfvorrichtung zum Abschneiden der Kopfscheibe, dadurch gekennzeichnet, dass oberhalb von Taster (5) und Messer (6) ein rotierender Wischer (10) vorgesehen ist, der die gleiche Drehrichtung wie die Häckselvorrichtung (1) aufweist, und dass die Oberseite des Tasters (5, 7) als Führung für die Kopfscheiben (13) dient und ausgebildet ist.

4. Vorrichtung nach Anspruch 3, dadurch gekennzeichnet, dass das Messer (6) und ein an das Messer anschliessender, aus Fangstäben (9) gebildeter Fangrost oder ein Fangblech eine Fangvorrichtung für die Kopfscheiben (13) bilden.

5. Vorrichtung nach Anspruch 3, dadurch gekennzeichnet, dass das Messer und die Fangstäbe (9) bzw. das Fangblech zum Boden hin gewölbt gestaltet sind.

6. Vorrichtung nach Anspruch 5, dadurch gekennzeichnet, dass die nach oben ragenden Spitzen der Fangstäbe (9) ebenso wie die Messerschneide (6) in Fahrtrichtung (F) weisen.

7. Vorrichtung nach Anspruch 3, dadurch gekennzeichnet, dass der Wischer (11) aus rotierenden Streifen (12) besteht und der Taster (5) und/oder der Fangrost aus hochkant angeordneten Flachstäben (7) besteht.

8. Vorrichtung nach Anspruch 3, dadurch gekennzeichnet, dass die Oberfläche des Tasters (5) an die Umlaufbahn des Endes des Wischers (11) angepasst ist.

9. Vorrichtung nach Anspruch 3, dadurch gekennzeichnet, das die Verschwenkachse (8) der Köpfvorrichtung (5, 6) sich zwischen der Häckselvorrichtung (1) und dem Wischer (11), vorzugsweise in dem Dreieck zwischen den Schlagkreisen des Häckslers (1) und des Wischers (11) oberhalb deren unterer gemeinsamer Tangente befindet.

10. Vorrichtung nach Anspruch 3, dadurch gekennzeichnet, dass das Messer (6) hinter der Projektion der Achse des Wischers (11) auf dem Acker liegt.

11. Vorrichtung nach Anspruch 3, dadurch gekennzeichnet, dass die Tastvorrichtung (5, 6) mittels Hebel, die in einer Parallelogrammaufhängung angeordnet sind, getragen ist, wobei die Hebel des Parallelogramms in Zwischenräumen zwischen den Wischerstreifen eingreifen.

## Revendications

1. Procédé pour la récolte de têtes et de feuilles de betteraves au moyen d'un dispositif de récolte se déplaçant au-dessus des rangs de betteraves, dans lequel on coupe les feuilles, les hache et les amène à un convoyeur, puis on coupe la tranche de tête individuellement suivant la taille de la betterave et la dirige sur un récipient collecteur contenant aussi les feuilles, caractérisé en ce que la tranche de tête subit, après la coupe un changement du sens de déplacement d'environ 150 à 190°, pour être rejetée dans le sens du déplacement du dispositif de récolte et dirigée sur l'opération de hachage des feuilles.

2. Procédé suivant la revendication 1, caractérisé en ce qu'avant le rejet, les tranches de têtes sont recueillies, soumises à un stockage intermédiaire et poussées jusque dans un dispositif de rejet.

3. Dispositif pour la récolte des têtes et des feuilles de betteraves, comprenant un hacheur (1), dont la hauteur de travail est réglable de manière fixe, qui enlève la plus grande partie des feuilles, les hache et les entraine ainsi qu'un dispositif d'étêtage, placé à la suite du hacheur et composé d'un palpeur à frottement (5) et d'un couteau (6), le dispositif d'étêtage étant destiné à couper la tranche de tête, caractérisé en ce qu'il est prévu, au dessus du palpeur (5) et du couteau (6), un racleur rotatif (10), qui tourne dans le même sens que le dispositif de hachage (1) et que le dessus du palpeur (5, 7) est conçu comme guidage des tranches de tête (13).

4. Dispositif suivant la revendication 3, caractérisé en ce que le couteau (6) et une grille de réception — formée de barres (9) de réception — ou une tôle de réception se raccordant au couteau forment un dispositif de réception pour les tranches de tête (13).

5. Dispositif suivant la revendication 3, caractérisé en ce que le couteau et les barres de réception (9) ou la tôle de réception sont courbés vers le sol.

6. Dispositif suivant la revendication 5, caractérisé en ce que les pointes des barres de réception (9) dépassant vers le haut ainsi que la lame du couteau (6) sont dirigées dans le sens (F) du déplacement.

7. Dispositif suivant la revendication 3, caractérisé en ce que le racleur (11) est composé de bandes rotatives (12) et que le palpeur (5) et/ou la grille de réception sont composés de barres plates (7) placées sur chant.

8. Dispositif suivant la revendication 3, caractérisé en ce que la surface du palpeur (5) est adaptée au parcours de l'extrémité du racleur (11).

9. Dispositif suivant la revendication 3, caractérisé en se que l'axe de pivotement (8) du dispositif d'étêtage (5, 6) se trouve entre le dispositif de hachage (1) et le racleur (11), de préférence dans le triangle compris entre les circonférences de battement du hacheur (1) et du racleur (11), au-dessus de leur tangente inférieure commune.

10. Dispositif suivant la revendication 3, caractérisé en ce que le couteau (6) est derrière la projection de l'axe du racleur (11) sur le champ.

11. Dispositif suivant la revendication 3, caractérisé en ce que le dispositif de palpage (5, 6) est porté au moyen de leviers disposés dans une suspension en parallélogramme, les leviers du parallélogramme s'engageant dans des espaces intermédiaires compris entre les bandes du racleur.

**Claims**

1. Process for harvesting the tops and leaves of beets by means of a harvesting machine, which moves over and along the rows of beets, according to which the beet leaf is initially cut from the beet, is chopped, is supplied to conveying means, and the top of the beet is cut off individually dependent on the growth of the beet and is passed to a storage bin, which also includes the beet leaves, characterized in that the direction of movement of the top of the beet is altered for 150 - 190° subsequent to the cut so that it is thrown in the direction of movement of the harvesting machine and is combined with the chopping action for the beet leaves.

2. Process according to claim 1, characterized in that the tops of the beets are caught before they are thrown backwards, are stored and are moved into throw-back means.

3. Machine for harvesting beet tops and beet leaves, comprising a chopper (1) the operation height of which is adjustable, which chopper cuts, chops and transports the main portion of the beet leaves, and a succeeding cutting device including a sliding caliper (5) and a knife (6) for cutting the top of a beet, characterized in that above caliper (5) and knife (6) a rotating wiper (10) is provided, which rotates in the same direction as the chopper (1), and that the upper side of the caliper (5, 7) is used and formed as a guide for the beet tops (13).

4. Machine according to claim 3, characterized in that the knife (6) and collecting screen or collecting plate formed of collecting bars (9) and joing the knife forms collecting means for the beet tops (13).

5. Machine according to claim 3, characterized in that the knife and the collecting bars (9) or the collecting plates are curved towards the ground.

6. Machine according to claim 5, characterized in that the upwardly extending tips of the collecting bars (9) similar to the knife edge (6) are extending in the direction of movement (F).

7. Machine according to claim 3, characterized in that the wiper (11) consists of rotating strips (12) and that the caliper (5) and/or the collecting screen are made of upright flat bars (7).

8. Machine according to claim 3, characterized in that the surface of the caliper (5) is adapted to the path of movement of the end of the wiper (11).

9. Machine according to claim 3, characterized in that the pivoting axis (8) of the cutting means (5, 6) is provided between chopper (1) and wiper (11), preferably within the triangle between the impact circle of chopper (1) and wiper (11) above their loer, common tangent.

10. Machine according to claim 3, characterized in that the knife (6) is arranged behind the projection of the axis of the wiper (11) onto the ground.

11. Machine according to claim 3, characterized in that the caliper (5, 6) is carried by means of levers mounted on a parallelogram support, whereby the levers of the parallelogram move into the spaces between the wiper strips.

Fig. 5

0 022 993

Fig.1

Fig.2

Fig.3

Fig.4

0 022 993